# EUROPÄISCHE PATENTSCHRIFT

(11) **EP 0 942 205 B1**
(45) Veröffentlichungstag und Bekanntmachung des Hinweises auf die Patenterteilung: **23.06.2004**
(21) Anmeldenummer: 99102677.4
(22) Anmeldetag: 12.02.1999
(51) Int. Cl.: F16J 15/08

(54) **Metallische Flachdichtung**
Metallic gasket
Joint plat métallique

(30) Priorität: 13.03.1998 DE 29804534 U
(43) Veröffentlichungstag der Anmeldung: 15.09.1999
(73) Patentinhaber: REINZ-Dichtungs-GmbH, 89233 Neu-Ulm (DE)
(72) Erfinder: Hieble, Franz, 89250 Senden/Aufheim (DE)
(74) Vertreter: Pfenning, Meinig & Partner

(56) Entgegenhaltungen:
- DE-C- 19 548 573
- FR-A- 2 158 684
- US-A- 5 642 893

## Beschreibung

Die Erfindung betrifft eine metallische Flachdichtung mit mindestens einem Dichtungsdurchbruch und mit höchstens drei metallischen Lagen, wobei mindestens eine der metallischen Lagen eine Sickung aufweist und die gesickte oder eine weitere metallische Lage in einem an den Dichtungsdurchbruch angrenzenden Bereich auf wenigstens einer Oberfläche mit einem Verformungsbegrenzer versehen ist.

Bei gesickten metallischen Flachdichtungen werden häufig Verformungsbegrenzer vorgesehen, welche z.B. einer vollständigen Verformung der Sicke im eingebauten Zustand der Flachdichtung entgegenwirken. Nach einer vollständigen Verformung würde die Sicke dauerhaft an Elastizität einbüßen, was insbesondere bei zyklisch auftretenden Belastungen mit einer Verschlechterung der Flachdichtungsfunktionalität verbunden wäre. Die Verformungsbegrenzer dienen außerdem dem Zweck, infolge einer lokal vergrößerten Flachdichtungsbauhöhe den Anpreßdruck in einem an den Dichtungsdurchbruch grenzenden Bereich zu erhöhen, um die Abdichtwirkung der Flachdichtung zu verbessern.

Aus der DE 195 48 573 sind dreilagige metallische Flachdichtungen bekannt, welche zwei gesickte Außenbleche und ein dazwischen angeordnetes und mit einem Verformungsbegrenzer versehenes Trägerblech aufweisen. Der Verformungsbegrenzer ist als ringförmiges Element ausgebildet und aus einem anderen Material als das Trägerblech gefertigt. Aus der DE 195 48 573 ist außerdem eine vierlagige Flachdichtung mit zwei gesickten Außenblechen, welche ein Falzblech und ein Trägerblech umgeben, bekannt. Als Verformungsbegrenzer dient der um das Trägerblech gebördelte Rand des Falzbleches. Das Trägerblech ist im Bereich der Umbördelung mit einer plastisch verformbaren und im eingebauten Zustand der Flachdichtung eingeebneten Rillierung versehen.

Nachteilig bei derartigen Flachdichtungen ist die relativ aufwendige Fertigung der Flachdichtung für den Fall, daß Trägerblech und Verformungsbegrenzer einen Materialverbund bilden. Die Verwendung eines Falzbleches als Verformungsbegrenzer hat den Nachteil, daß mit dem Falzblech eine zusätzliche Blechlage benötigt wird.

Ausgehend von diesen und weiteren Nachteilen des Standes der Technik liegt der Erfindung die Aufgabe zugrunde, eine metallische Flachdichtung zu schaffen, welche einen Verformungsbegrenzer mit neuartigen Eigenschaften aufweist und zudem eine einfache Fertigung erlaubt. Der Verformungsbegrenzer sollte insbesondere auch bei ein- oder zweilagigen Flachdichtungen eine hohe Funktionalität gewährleisten und selbst im Falle dynamischer Beanspruchung eine hohe Langzeitstabilität aufweisen.

Diese Aufgabe wird gelöst durch den Anspruch 1. Die Unteransprüche betreffen vorteilhafte Ausgestaltungen und Weiterbildungen der Erfindung.

Eine maximal dreilagige metallische Flachdichtung, welche eine Lage mit einem durch Umformen gebildeten und einen Dichtungsdurchbruch umgebenden Verformungsbegrenzer in Form einer Rillierung aufweist, bildet in bezug auf die Begrenzung des Sickenfederweges und die lokale Erhöhung des Anpreßdruckes ein neuartiges Dichtungskonzept.

Die Rillierung, welche bei Flachdichtungen für ebene Dichtflächen ein über die Dicke des rillierten Bleches überstehendes Profil aufweist, kann als Ersatz für die im Stand der Technik als Verformungsbegrenzer verwendeten Falzbleche dienen. Bei einem Einbau der erfindungsgemäßen Flachdichtung zwischen zwei Dichtflächen, die zumindest im Bereich der Rillierung der Flachdichtung eine über mindestens eine Dichtflächenebene stufenförmig überstehende Erhebung aufweisen, sollte die Summe aus dem Gesamtüberstand der Erhebungen über die beiden Dichtflächen und der maximalen Stärke der rillierten Lage im rillierten Bereich größer sein als die Stärke der rillierten Lage außerhalb ihres rillierten Bereiches. Unter der maximalen Stärke ist dabei der fiktive Abstand von zwei auf gegenüberliegenden Seiten des rillierten Bleches im rillierten Bereich angeordneten planaren Auflagen zu verstehen. Auch die vorstehend beschriebene Anordnung gestattet aufgrund der erfindungsgemäßen Rillierung eine falzblechlose Ausgestaltung der Flachdichtung. Die falzblechlose Ausgestaltung erweist sich insbesondere bei einlagigen Flachdichtungen als notwendig.

Vorteilhafterweise weist der erfindungsgemäße Verformungsbegrenzer zumindest geringfügig und bevorzugt vorwiegend elastische Eigenschaften auf, um auch bei dynamischen Belastungen, wie sie beispielsweise bei Zylinderkopfdichtungen für Brennkraftmaschinen auftreten, voll funktionsfähig zu bleiben. Für eine zumindest im rillierten Bereich der metallischen Lage aufgebrachte Beschichtung aus z.B. einem Elastomer bewirkt die Rillierung im eingebauten Zustand der Flachdichtung eine Fixierung der Beschichtung im an den Dichtungsdurchbruch angrenzenden Bereich. Zur Erzielung dieses Kammereffektes darf die Rillierung im eingebauten Zustand der Flachdichtung nicht vollständig eingeebnet werden.

Die Rillierung ist auf einer der Sickenwölbung zugewandten Oberfläche oder auch auf beiden Oberflächen des rillierten Bleches ausgebildet. Da die einzelnen Rillen bevorzugt den Dichtungsdurchbruch konzentrisch einfassen, ist es ausgeschlossen, daß ein den Dichtungsdurchbruch durchströmendes fluides Medium in das Innere der Flachdichtung eindringt. Wenn zwischen den konzentrischen Erhebungen der einzelnen Rillen Stege vorgesehen werden, welche im wesentlichen senkrecht zu den Rillen verlaufen und ungefähr die selbe Höhe wie die Erhebungen aufweisen, kann eine umlaufende Leckage ausgeschlossen werden. Im Falle eines Lecks werden nur wenige, durch Rillen und Stege definierte Zellen gefüllt.

Vorteilhafterweise läßt sich die Rillierung bei gleichbleibenden Dichtungseigenschaften und gleichbleibend geringem Fertigungsaufwand um beliebig geformte Dichtungsdurchbrüche (kreisrund, oval, mehreckig) anordnen. Bei den Verformungsbegrenzern des Standes der Technik dagegen steigt der Fertigungsaufwand in der Regel proportional zur Komplexität der Form des Dichtungsdurchbruches.

Die Rillierung läßt sich durch Verfahren wie Pressen, Stauchen oder Rollen ausbilden. In Frage kommt dabei sowohl die Kaltverformung als auch, z.B. für rillierte Lagen aus besonders elastischem Federstahl, die Heißverformung.

Weitere Einzelheiten und bevorzugte, aber beispielhafte Ausführungsformen der Erfindung ergeben sich aus den Figuren und den nachfolgend beschriebenen Ausführungsbeispielen. Es zeigen jeweils im Halbschnitt:
- Fig. 1:: Eine einlagige Flachdichtung mit dem erfindungsgemäßen Verformungsbegrenzer;
- Fig. 2:: eine zweilagige Flachdichtung mit dem erfindungsgemäßen Verformungsbegrenzer;
- Fig. 3:: eine dreilagige Flachdichtung mit dem erfindungsgemäßen Verformungsbegrenzer; und
- Fig. 4: eine erfindungsgemäße Zylinderkopfdichtung für einen Buchsenmotor.

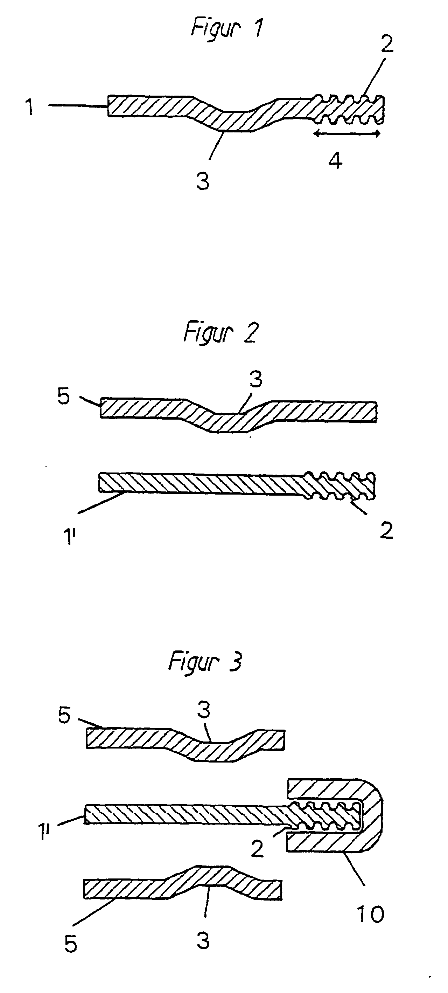

In Fig. 1 ist eine einlagige Flachdichtung mit einer den Dichtungsdurchbruch konzentrisch umgebenden Rillierung 2 dargestellt. Ein rillierter Bereich 4 ist auf beiden Oberflächen der metallischen Lage 1 angeordnet. Die mit einer Sicke 3 versehene metallische Lage 1 kann aus C-Stahl oder Federstahl gefertigt sein.

In Fig. 2 ist eine zweilagige Flachdichtung mit einer gesickten Lage 5 und einer Lage 1' aus dünnem C-Stahl, welche eine beidseitige Rillierung 2 aufweist, dargestellt.

Fig. 3 zeigt eine dreilagige Flachdichtung mit zwei gesickten Außenblechen 5 und einem zwischen den beiden Außenblechen angeordneten rillierten Distanzblech 1'. Das Distanzblech 1', welches dicker als die Außenbleche 5 ausgestaltet sein kann, ist im Bereich der Rillierung 2 mit einem U-Bördel 10 umbördelt. Die Außenbleche 5 sind im Bereich des U-Bördels 10 zurückversetzt. Die Rillierung 2 fungiert als Verformungsbegrenzer für den U-Bördel 10.

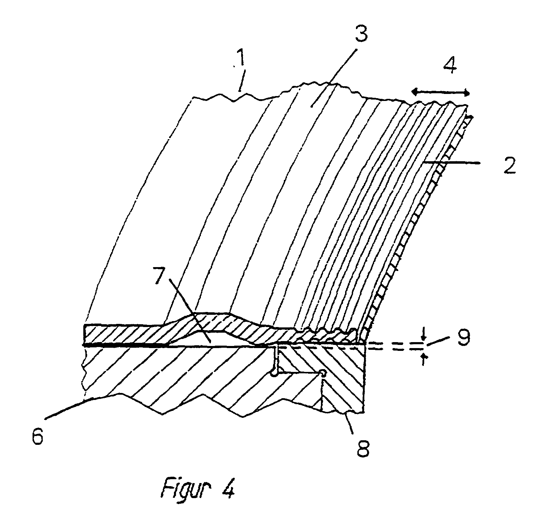

In Fig. 4 ist eine einlagige Zylinderkopfdichtung für einen Buchsenmotor dargestellt. In den Motorblock 6 und ggf. auch in den nicht abgebildeten Zylinderkopf ist im Bereich der Zylinderbohrung eine Buchse 8 eingelassen, welche einen Überstand 9 über die Dichtfläche 7 des Motorblocks 6 bzw. des Zylinderkopfes aufweist. Während die maximale Stärke der rillierten Lage 1 im rillierten Bereich 4 der metallischen Lage 1 geringer ist als die Stärke der Lage 1 außerhalb des rillierten Bereiches 4, ist die Summe aus maximaler Stärke der rillierten Lage 1 im rillierten Bereich 4 und Gesamtüberstand der Buchse 8 über Motorblockebene 7 und ggf. Zylinderkopfebene größer als die Stärke der Lage 1 außerhalb des rillierten Bereiches 4. Damit ist die Funktion der Rillierung 2 als Verformungsbegrenzer bzw. zur lokalen Erhöhung des Anpreßdruckes gewährleistet. Sofern nur in den Motorblock 6 eine Buchse 8 eingelassen ist, ist der Gesamtüberstand identisch mit dem Überstand 9.

Die erfindungsgemäße Flachdichtung eignet sich als Flanschdichtung außer als Zylinderkopfdichtung insbesondere auch als Achsdichtung, Auspuffdichtung oder Abgasdichtung. Die Rillierung kann dabei alle Arten von Durchbrüchen und insbesondere Brennraumdurchbrüche oder Durchbrüche für den Durchtritt fluider Medien einfassen. Das zumindest bereichsweise Aufbringen von Beschichtungen, z.B. auf den rillierten Bereich 4 der rillierten Lage oder andere Lagen der erfindungsgemäßen Flachdichtung, ist möglich. Auch können Lagen der Flachdichtung mit ein- oder beidseitiger Gummiauflage versehen sein.

## Patentansprüche

1. Metallische Flachdichtung für den Einbau zwischen zwei abzudichtenden Flächen mit mindestens einem Dichtungsdurchbruch und mit höchstens drei metallischen Lagen, wobei mindestens eine der metallischen Lagen eine Sickung aufweist, und die gesickte oder eine weitere metallische Lage in einem an den Dichtungsdurchbruch angrenzenden Bereich auf wenigstens einer Oberfläche mit einem Verformungsbegrenzer versehen ist,
**dadurch gekennzeichnet,**
**daß** der Verformungsbegrenzer an die metallische Lage (1, 1') angeformt ist und als eine den Dichtungsdurchbruch einfassende Rillierung (2) ausgebildet ist, wobei die Stärke der rillierten Lage (1, 1') außerhalb des rillierten Bereiches (4) geringer ist als die maximale Stärke der rillierten Lage (1, 1') im rillierten Bereich (4) oder als die Summe aus der maximalen Stärke der rillierten Lage (1, 1') im rillierten Bereich (4) und einem Gesamtüberstand von mindestens einer stufenförmigen Erhebung (9) der abzudichtenden Flächen im Bereich der Rillierung (2).

2. Metallische Flachdichtung nach Anspruch 1, **dadurch gekennzeichnet, daß** die Rillierung (2) elastische Eigenschaften aufweist.

3. Flachdichtung nach einem der vorhergehenden Ansprüche, **dadurch gekennzeichnet, daß** im rillierten Bereich (4) Stege angeordnet sind, die im wesentlichen senkrecht zur Rillierung (2) verlaufen.

4. Flachdichtung nach einem der vorhergehenden Ansprüche, **dadurch gekennzeichnet, daß** die Flachdichtung eine gesickte Einlagendichtung ist.

5. Flachdichtung nach einem der vorhergehenden Ansprüche, **dadurch gekennzeichnet, daß** die Flachdichtung eine Zweilagendichtung mit einer gesickten Lage (5) und einer die Rillierung (2) aufweisenden ungesickten Lage (1') ist.

6. Flachdichtung nach einem der vorhergehenden Ansprüche, **dadurch gekennzeichnet, daß** die Flachdichtung eine Dreilagendichtung ist.

7. Flachdichtung nach Anspruch 6, **dadurch gekennzeichnet, daß** die Flachdichtung zwei gesickte Außenlagen (5) und eine rillierte, ungesickte Zwischenlage (1') umfaßt.

8. Flachdichtung nach einem der Ansprüche 6 oder 7, **dadurch gekennzeichnet, daß** die Rillierung (2) von einer U-förmigen Umbördelung (10) eingefaßt ist und die Außenlagen (5) im Bereich der Umbördelung (10) zurückversetzt sind.

9. Flachdichtung nach einem der vorhergehenden Ansprüche, **dadurch gekennzeichnet, daß** die rillierte Lage (1, 1') zumindest im rillierten Bereich mit einer elastomeren Beschichtung versehen ist.

10. Flachdichtung nach einem der vorhergehenden Ansprüche, **dadurch gekennzeichnet, daß** die Flachdichtung eine Flanschdichtung ist.

11. Flachdichtung nach einem der Ansprüche 1 bis 9, **dadurch gekennzeichnet, daß** die Flachdichtung eine Zylinderkopfdichtung ist.

## Claims

1. Metallic flat seal for installation between two surfaces to be sealed with at least one seal break and a maximum of three metallic layers, and at least one of the metallic layers comprises a bead, and the beaded or a further metallic layer is in an area adjacent the seal break provided on at least one surface with a deforming limiter, **characterised in that** the deforming limiter is moulded onto the metallic layer (1, 1') and designed as a grooving (2) which rims the seal break, and the strength of the grooved layer (1, 1') outside the grooved area (4) is less than the maximum strength of the grooved layer (1, 1') in the grooved area (4) or the sum of the maximum strength of the grooved layer (1, 1') in the grooved area (4) and an overall protrusion of at least one stepped elevation (9) of surfaces to be sealed in the area of the grooving (2).

2. Metallic flat seal according to Claim 1, **characterised in that** the grooving (2) offers elastic properties.

3. Flat seal according to one of the above claims, **characterised in that** in the grooved area (4) are arranged webs which extend substantially perpendicularly to the grooving (2).

4. Flat seal according to one of the above claims, **characterised in that** the flat seal is a beaded installation seal.

5. Flat seal according to one of the above claims, **characterised in that** the flat seal is a two-layer seal with a beaded layer (5) and a layer (1') which is unbeaded and comprises the grooving (2).

6. Flat seal according to one of the above claims, **characterised in that** the flat seal is a three-layer seal.

7. Flat seal according to Claim 6, **characterised in that** the flat seal comprises two beaded outer layers (5) and a grooved unbeaded intermediate layer (1').

8. Flat seal according to one of Claims 6 or 7, **characterised in that** the grooving (2) is encased by a U-shaped flanging (10), and the outer layers (5) in the area of the flanging (10) are transposed back.

9. Flat seal according to one of the above claims, **characterised in that** the grooved layer (1, 1') is at least in the grooved area provided with an elastomer coating.

10. Flat seal according to one of the above claims, **characterised in that** the flat seal is a flange seal.

11. Flat seal according to one of Claims 1 to 9, **characterised in that** the flat seal is a cylinder-head seal.

## Revendications

1. Joint d'étanchéité métallique plat destiné à être inséré entre deux surfaces à étanchéifier avec au moins un passage d'étanchéité et au maximum trois couches métalliques, dans lequel au moins l'une des couches métalliques possède une moulure et la couche métallique moulurée ou une autre couche métallique comporte, dans une zone jouxtant le passage d'étanchéité, au moins une surface comportant un limiteur de déformation, **caractérisé en ce que** le limiteur de déformation est formé sur la couche métallique (1,1') et est agencé sous la forme d'un rainurage (2) enserrant le passage d'étanchéité, l'épaisseur de la couche rainurée (1,1') à l'extérieur de la zone rainurée (4) étant inférieure à l'épaisseur maximale de la couche rainurée (1,1') dans la zone rainurée (4) ou à la somme de l'épaisseur maximale de la couche rainurée (1,1') dans la zone rainurée (4) et est d'une hauteur totale de débordement d'au moins une partie surélevée de forme étagée (9) des surfaces à étanchéifier dans la zone du rainurage (2).

2. Joint d'étanchéité métallique plat selon la revendication 1, **caractérisé en ce que** le rainurage (2) possède des caractéristiques élastiques.

3. Joint d'étanchéité métallique plat selon l'une des revendications précédentes, **caractérisé en ce que** dans la zone rainurée (4) sont disposées des barrettes, qui s'étendent essentiellement perpendiculairement au rainurage (2).

4. Joint d'étanchéité métallique plat selon l'une des revendications précédentes, **caractérisé en ce que** le joint d'étanchéité plat est un joint d'étanchéité mouluré à une seule couche.

5. Joint d'étanchéité métallique plat selon l'une des revendications précédentes, **caractérisé en ce que** le joint d'étanchéité plat possède une garniture d'étanchéité à deux couches, comportant une couche moulurée (5) et une couche (1') non moulurée, possédant le rainurage (2).

6. Joint d'étanchéité métallique plat selon l'une des revendications précédentes, **caractérisé en ce que** le joint d'étanchéité plat est un joint d'étanchéité à trois couches.

7. Joint d'étanchéité métallique plat selon la revendication 6, **caractérisé en ce que** le joint d'étanchéité plat comporte deux couches extérieures moulurées (5) et une couche intercalaire rainurée et non moulurée (1').

8. Joint d'étanchéité métallique plat selon l'une des revendications 6 ou 7, **caractérisé en ce que** le rainurage (2) est entouré par un bordage en forme de U (10) et que les couches extérieures (5) sont rétractées dans la zone du bordage.

9. Joint d'étanchéité métallique plat selon l'une des revendications précédentes, **caractérisé en ce que** la couche rainurée (1,1') comporte un revêtement élastomère au moins dans la zone rainurée.

10. Joint d'étanchéité métallique plat selon l'une des revendications précédentes, **caractérisé en ce que** le joint d'étanchéité plat est un joint d'étanchéité en forme de bride.

11. Joint d'étanchéité métallique plat selon l'une des revendications 1 à 9, **caractérisé en ce que** le joint d'étanchéité plat est un joint de culasse.
